# DEMANDE DE BREVET EUROPEEN

(11) **EP 4 060 503 A1**
(43) Date de publication de la demande: **21.09.2022**
(21) Numéro de dépôt: 22162670.8
(22) Date de dépôt: 17.03.2022
(51) Int. Cl.: G06F 11/30, G06F 9/48, G06F 11/34, G06F 11/36

(54) **PROCÉDÉ DE MITIGATION DE CONTENTIONS POUR UNE APPLICATION OPÉRATIONNELLE ET SYSTÈME DE MITIGATION DE CONTENTIONS ASSOCIÉ**

(30) Priorité: 19.03.2021 FR 2102772
(71) Demandeur: THALES, 92400 Courbevoie (FR)
(72) Inventeur: LAMOUR, Pierrick, 33700 MERIGNAC (FR); CANU, Richard, 33700 MERIGNAC (FR); FUMEY, Marc, 33700 MERIGNAC (FR)
(74) Mandataire: Lavoix

(57) **Abrégé**

La présente invention concerne un procédé de mitigation de contentions pour une application opérationnelle mise en œuvre par une plateforme embarquée. Ce procédé comprenant les étapes suivantes :
- construction (110) d'au moins une première application sensible configurée pour subir des contentions de la part de l'application opérationnelle ou d'au moins une application gabarit configurée pour imposer des contentions sur l'application opérationnelle ;
- exécution (120) de l'application opérationnelle par la plateforme embarquée en parallèle avec la première application sensible ou l'application gabarit ;
- détermination (130) de contentions générées sur la première application sensible par l'application opérationnelle ou, respectivement, sur l'application opérationnelle par l'application gabarit ;
- mesure (140) des contentions déterminées.

## Description

La présente invention concerne un procédé de mitigation de contentions pour une application opérationnelle.

La présente invention concerne également un système de mitigation de contentions associé à ce procédé.

L'invention est notamment applicable dans le domaine de plateformes embarqués multi-masters, comme par exemple des plateformes embarquées utilisables dans le domaine avionique.

De manière connue en soi, une telle plateforme multi-masters comprend une pluralité de masters et une pluralité de ressources partagées, chaque master étant apte à exécuter au moins une application en utilisant une ou plusieurs ressources partagées.

Dans ce type de plateformes, l'utilisation des ressources partagées peut engendrer des conflits liés aux accès concurrents par différents masters. Ces conflits se traduisent généralement par des durées de fonctionnement de processus non maitrisées. Cela ne permet alors pas de prédire le fonctionnement de la plateforme de manière déterministe, ce qui la rend inutilisable dans les domaines où la sûreté de fonctionnement est forte.

En particulier, dans un contexte multi-masters, l'accès aux périphériques peut s'avérer problématique : nombre de niveaux d'arbitrage, ressources internes partagées, vitesse des bus, protocole, etc. De ce fait, il existe une multitude de canaux d'interférence à envisager. Si aucune précaution n'est prise par un composant multi-masters, celui-ci peut s'avérer être inexploitable et engendrer une perte totale du système.

Dans un contexte où plusieurs applications fonctionnent en parallèle, elles interagissent, malgré elles, les unes avec les autres se ralentissant mutuellement. Il semble donc évident que chaque problème doit être pris à la source afin d'appliquer un moyen de mitigation adéquate.

Les processeurs multi-cœurs introduisent simultanément plusieurs difficultés :
- Complexité : la complexité d'un système sur une puce (SoC) augmente encore par rapport aux processeurs mono-cœur. En particulier, des dispositifs d'arbitrage complexes existent dans les organes d'échange (caches par exemple) entre les différents cœurs et vis-à-vis de la mémoire externe.
- Opacité : pour des raisons de protection, les fabricants ne rendent pas publics les parties sensibles de leurs architectures, en particulier les organes d'interconnexion.
- Contentions dans l'exécution des applications : il résulte des stratégies d'arbitrage et des organes internes d'interconnexion des contentions dans l'exécution des logiciels. Ces contentions sont a priori difficiles à maitriser compte tenu des deux précédents points.

Dans les approches traditionnelles, il est nécessaire d'identifier et de maitriser tous les canaux d'interférence potentiels entre applications afin de pouvoir garantir un partitionnement robuste.

La qualification des applications critiques repose sur l'identification et la démonstration de la tenue d'un paramètre appelé « WCET » (de l'anglais « Worst Case Execution Time » ou « Temps d'Exécution Pire Cas » en français). Dans un contexte multi-cœurs, ce paramètre doit donc tenir compte des contentions dans un pire cas possible. Ce pire cas dépend de ce qui est exécuté sur l'ensemble des cœurs du processeur.

Le problème à résoudre est de trouver une méthode permettant d'identifier et de garantir les conditions pire cas relatives à l'application et aux conditions générant les contentions, avec un objectif compatible d'un déploiement industriel (contentions raisonnablement limitées).

Dans une plateforme mono-master, ce problème n'apparait pas car le master étant seul, les applications ne sont pas exécutées en parallèle, et le séquencement de ces applications peut être réalisé de manière déterministe par le système opérationnel. Les limitations sont interprétées en termes de temps d'exécution uniquement.

Dans une plateforme multi-masters, il existe des éléments d'accélération permettant de cacher les problèmes. Toutefois, étant donné que ces mécanismes ont des limites physiques (taille, performance, etc.), en fonction de l'application et en cas de débordement, les problèmes apparaissent.

L'architecture des processeurs permet également de limiter les contentions (par exemple : ségrégation physique du bus mémoire par rapport aux bus des autres périphériques).

L'état de l'art inclut plusieurs approches applicables dans un contexte d'avionique modulaire intégrée, appelée « IMA » (de l'anglais « Integrated Modular Avionics ») :
- Traitement d'applications critiques sur un seul cœur en priorité, les contentions étant reportées sur des applications moins critiques (approche émise par « Wind River ») ;
- Répartition de bande passante entre cœurs, et loi permettant d'apprécier la contention sur chaque en fonction de la bande passante allouée. Il est entrevu des performances dans le cas d'une équi-répartition de la bande passante de x5 par rapport à un mono-cœur (approche émise par « Green Hills ») ;
- Usage d'une collection d'applications stressantes image d'une application réelle permettant de caractériser les contentions d'une configuration donnée (approche émise par « Rapita »).

Ces approches impliquent toutes une intégration multi-applications ou multi-cœurs pour vérifier ou confirmer le bon comportement des applications en présence des autres applications exécutées en parallèle.

Conformément à ces approches, la recherche d'un pire cas peut s'avérer extrêmement compliquée voire impossible tant la combinatoire est importante.

La présente invention a pour but de résoudre les problèmes précités et de proposer un procédé et un système de mitigation de contentions permettant de résoudre les problèmes de contentions dans une plateforme multi-masters, sans avoir à analyser une combinatoire importante de différentes applications de la plateforme ni à rechercher un pire cas de chaque combinaison ni à surdimensionner les différentes estimations.

À cet effet, l'invention a pour objet un procédé de mitigation de contentions pour une application opérationnelle mise en œuvre par une plateforme embarquée, la plateforme embarquée comprenant une pluralité de cœurs et une pluralité de ressources partagées, chaque cœur étant apte à exécuter au moins une application en utilisant une ou plusieurs ressources partagées via un canal d'accès établi entre ce cœur et la ressource partagée correspondante permettant l'usage de cette ressource partagée.

Le procédé comprend les étapes suivantes :
- construction d'au moins une première application sensible configurée pour subir des contentions de la part de l'application opérationnelle ou d'au moins une application gabarit configurée pour imposer des contentions sur l'application opérationnelle et construite à partir d'une application existante de la plateforme ;
- exécution de l'application opérationnelle par la plateforme embarquée en parallèle avec la première application sensible ou l'application gabarit ;
- détermination de contentions générées sur la première application sensible par l'application opérationnelle ou, respectivement, sur l'application opérationnelle par l'application gabarit ;
- mesure des contentions déterminées.

Suivant d'autres aspects avantageux de l'invention, le procédé comprend une ou plusieurs des caractéristiques suivantes, prise(s) isolément ou suivant toutes les combinaisons techniquement possibles :
- l'application gabarit est déterminée à partir de paramètres d'agressivité de l'application existante correspondante, les paramètres d'agressivité d'une application caractérisant la capacité de cette application à charger les ressources partagées en générant un temps d'attente pour au moins une autre application de la plateforme ;
- les paramètres d'agressivité d'au moins une application sont déterminés en identifiant des motifs de contention prédéterminés dans le code source de cette application, chaque motif de contention prédéterminé étant choisi dans le groupe comprenant :
   - instruction d'actualisation d'une ressource partagée ;
   - changement de pages au sein d'une même banque mémoire ;
   - éviction de lignes de la mémoire cache L2 ;
   - instruction générant une contention ;
- les paramètres d'agressivité d'au moins une application sont déterminés en fonction de critères d'agressivité des motifs de contention identifiés, chaque critère d'agressivité étant choisi dans le groupe comprenant :
   - nombre maximal d'instructions d'actualisation d'une ressource partagée ;
   - nombre maximal de changements de pages au sein d'une même banque mémoire ;
   - nombre maximal d'évictions de lignes de la mémoire cache L2 ;
   - densité d'instructions générant une contention ;
- les paramètres d'agressivité d'au moins une application sont déterminés en exécutant ladite application en parallèle avec au moins une deuxième application sensible configurée pour subir des contentions de la part de ladite application ;
- la première application sensible ou, respectivement, la deuxième application sensible ne génère sensiblement pas de contentions sur l'application correspondante ;
- la première application sensible ou la deuxième application sensible partage au moins un canal d'interférence avec l'application correspondante, le ou chaque canal d'interférence étant un canal d'accès à une ressource partagée présentant au moins une partie partagée avec un autre canal d'accès à cette même ressource ;
- lors de l'étape de construction, une application gabarit est construite pour chaque application existante de la plateforme, l'étape d'exécution comprenant alors l'exécution de l'ensemble des applications gabarit construites en parallèle avec l'application opérationnelle et l'étape de détermination comprenant la détermination de contentions générées sur l'application opérationnelle par chacune des applications gabarit ou toute combinaison des applications gabarit ;
- lors de l'étape de construction, une seule première application sensible est construite.

L'invention a également pour objet un système de mitigation de contentions pour une application opérationnelle mise en œuvre par une plateforme embarquée, comprenant des moyens techniques adaptés pour mettre en œuvre le procédé tel que défini précédemment.

Ces caractéristiques et avantages de l'invention apparaitront à la lecture de la description qui va suivre, donnée uniquement à titre d'exemple non limitatif, et faite en référence aux dessins annexés, sur lesquels :
- [Fig 1] la figure 1 est une vue schématique d'une plateforme embarquée et d'un système de mitigation de contentions selon l'invention, le système de mitigation de contentions étant associé à la plateforme embarquée ;
- [Fig 2] la figure 2 est un organigramme d'un procédé de mitigation de contentions selon l'invention, le procédé étant mis en œuvre par le système de mitigation de contentions de la figure 1 ; et
- [Fig 3] [Fig 4] les figures 3 et 4 sont des vues illustrant différents exemples de mise en œuvre du procédé de la figure 2.

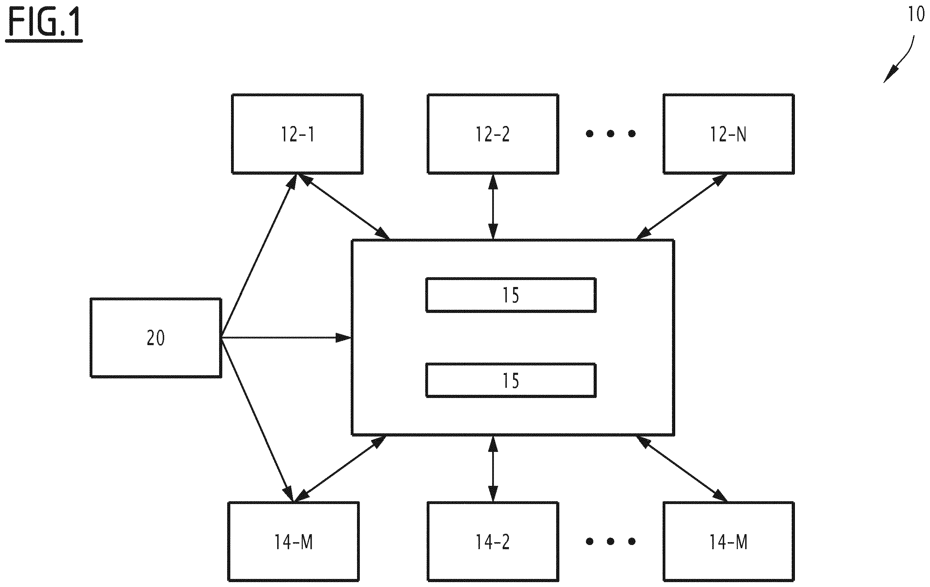

Un exemple d'une plateforme embarquée 10 est en effet illustré sur la figure 1.

Une telle plateforme embarquée 10 présente par exemple un système critique, notamment un système critique avionique. Dans ce dernier cas, la plateforme embarquée 10 est donc configurée pour effectuer une ou plusieurs tâches avioniques.

Dans l'ensemble des cas, la plateforme embarquée 10 est conçue pour fonctionner dans un domaine d'usage particulier. Ce domaine définit donc l'architecture de cette plateforme ainsi qu'au moins certaines caractéristiques de fonctionnement des composantes de cette plateforme. Dans ce cas, le fonctionnement de la plateforme 10 correspond à son fonctionnement nominal.

En référence à la figure 1, la plateforme embarquée comprend N cœurs 12-1, ...,12-N, M ressources 14-1, ...,14-M partagées et un ou plusieurs niveaux d'arbitrage 15 entre les cœurs et les ressources, les nombres M et N étant strictement supérieurs à 1.

Chaque cœur 12-1, ...,12-N, pouvant être appelé également processeur ou master, est connu en soi. En particulier, chaque cœur 12-1, ...,12-N est apte à exécuter une application en utilisant une ou plusieurs ressources partagées 14-1, ...,14-M.

Pour ce faire, chaque cœur 12-1, ...,12-N est apte par exemple à envoyer des requêtes vers au moins certaines des ressources partagées 14-1, ..., 14-M et à recevoir des réponses à ces requêtes.

Dans la suite, les applications exécutées par les cœurs 12-1, ...,12-N dans le cas d'un fonctionnement nominal de la plateforme seront appelées applications opérationnelles. Par exemple, lorsque la plateforme 10 présente un système avionique, les applications opérationnelles présentent des applications configurées pour mettre en œuvre différentes tâches avioniques assurées par un tel système.

Chaque ressource partagée 14-1, ...,14-M présente une composante matérielle et/ou éventuellement logicielle, permettant aux cœurs 12-1, ...,12-N d'exécuter les applications.

À titre d'exemple, ces ressources partagées 14-1, ...,14-M comprennent un espace de stockage, une mémoire vive, et/ou tout autre périphérique connu en soi.

En outre, chaque ressource partagée 14-1, ...,14-M est définie par au moins une caractéristique de son fonctionnement. Une telle caractéristique peut par exemple concerner une capacité de traitement de données par la ressource correspondante, telle que par exemple la vitesse d'écriture, la vitesse de lecture, le débit assuré, la taille de sa mémoire tampon, etc.

Chaque cœur 12-1, ...,12-N est apte à utiliser une ou plusieurs ressources partagées 14-1, ...,14-M via un ou plusieurs niveaux d'arbitrage 15 connus en soi.

En particulier, chaque niveau d'arbitrage 15 se présente par exemple sous la forme d'un ou de plusieurs bus d'accès permettant de contrôler les accès de chaque cœur 12-1, ...,12-N à chaque ressource 14-1, ...,14-M.

Sur la figure 1, deux niveaux d'arbitrage sont illustrés.

Tout comme les ressources, chaque niveau d'arbitrage 15 est défini également par une ou plusieurs caractéristiques, telles que la vitesse de transmission, le débit, etc.

Les niveaux d'arbitrage 15 permettent ainsi de définir des canaux d'accès des cœurs 12-1, ...,12-N aux ressources 14-1, ...,14-N.

En particulier, par « canal d'accès », on entend une association d'un cœur 12-1, ...,12-N et d'une ressource partagée 14-1, ...,14-M rendant utilisable cette ressource par ce cœur.

Ainsi, un canal d'accès peut par exemple présenter un canal de communication de données entre le cœur et la ressource correspondants, ces données étant utilisables pour exécuter une application par le cœur.

Les canaux d'accès sont définis par l'architecture de la plateforme 10, au stade de la conception de celle-ci.

Le système de mitigation de contentions 20 illustré également sur la figure 1 permet d'identifier des contentions au sein de la plateforme 10 lors de l'intégration de différentes applications opérationnelles dans cette plateforme, en mettant en œuvre le procédé de mitigation de contentions expliqué plus en détail par la suite.

Pour ce faire, le système de mitigation de contentions 20 comprend par exemple un logiciel de mitigation de contentions stocké dans une mémoire prévue à cette effet et exécutable par un ou plusieurs processors adaptés. Cette mémoire et ces processeurs font par exemple partie du système de mitigation de contentions 20 qui se présente alors dans ce cas sous la forme d'un calculateur. Selon un autre exemple de réalisation, cette mémoire et ces processeurs font partie d'un calculateur externe.

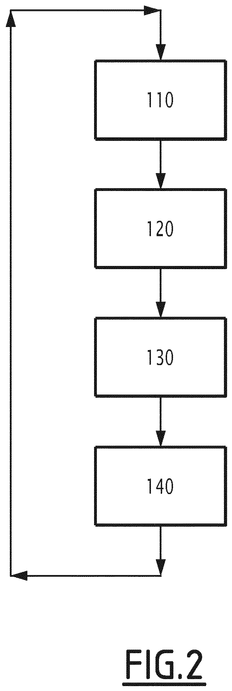

Le procédé de mitigation de contentions mis en oeuvre par le système de mitigation de contentions 20 sera désormais expliqué en référence à la figure 2 présentant un organigramme de ses étapes.

Ce procédé de mitigation est mis en oeuvre en relation avec chaque application opérationnelle devant être déployée sur la plateforme 10. Autrement dit, lorsque plusieurs applications opérationnelles sont à déployer sur la plateforme, le procédé de mitigation est mis en oeuvre pour chacune d'entre elles de manière consécutive.

De plus, pour chacune des applications opérationnelles, le procédé de mitigation peut être mis en oeuvre selon un premier mode de réalisation ou un deuxième mode de réalisation. Le mode de réalisation à appliquer est par exemple choisi en fonction de l'application opérationnelle pour laquelle ce procédé est mis en oeuvre.

Selon le premier mode de réalisation, lors d'une première étape 110 du procédé, le système 20 construit une application sensible configurée pour subir des contentions de la part de l'application opérationnelle, à partir des critères de sensibilité prédéterminés.

En particulier, par « sensibilité » d'une application, on entend un ralentissement potentiel de l'application vis-à-vis des contentions générées par la plateforme 10 se traduisant par une augmentation de son temps d'exécution.

Ainsi, par « application sensible », on entend une application qui est construite pour subir des contentions de la part de l'application donnée. Avantageusement, l'application sensible est construite pour ne pas générer de contentions sur l'application correspondante.

Pour construire une telle application sensible pour un contexte donné, le système 20 analyse l'ensemble des canaux d'accès de cette application et parmi au moins certains de ces canaux d'accès, crée des canaux d'interférence.

Par « canal d'interférence », on entend un canal d'accès à une ressource partagée présentant au moins une partie partagée avec un autre canal d'accès à cette même ressource.

Ainsi, une application sensible présente au moins un canal d'interférence avec l'application opérationnelle pour laquelle elle a été construite. De plus, sur ce canal d'interférence, l'application sensible subit des contentions de la part de cette application.

Selon un exemple de réalisation particulier de l'invention, une unique application sensible est construite pour l'ensemble des applications opérationnelles. Cela est fait par exemple en prenant l'ensemble des canaux d'interférence en compte.

Lors de la deuxième étape 120 du premier mode de réalisation de ce procédé, le système 20 exécute l'application opérationnelle par la plateforme embarquée 10 en parallèle avec l'application sensible construite lors de la première étape 110.

En particulier, lors de cette étape 120, l'application opérationnelle est exécutée sur la plateforme 10 dans son contexte de déploiement final : temporel et spatial. L'application sensible quant à elle est exécutée sur l'ensemble du temps disponible, en parallèle de l'application opérationnelle, mais sur un seul cœur 12-1, ...,12-N libre.

Lors de la troisième étape 130 du premier mode de réalisation du procédé, le système 20 détermine des contentions générées sur l'application sensible par l'application opérationnelle. Ces contentions sont déterminées notamment en analysant les canaux d'interférence correspondants de ces applications.

Lors de la quatrième étape 140 du premier mode de réalisation du procédé, le système 20 mesure les contentions déterminées lors de l'étape précédente. Cette quatrième étape 140 est par exemple mise en œuvre en parallèle avec la troisième étape 130.

Pour ce faire, le système 20 peut par exemple compter le nombre de boucles d'exécution de l'application sensible. La valeur de ce compteur est étalonnée en isolant l'application sensible. La contention est alors mesurée en faisant la différence ou le rapport entre le nombre de boucles réellement acquises pendant le temps d'exécution de l'application opérationnelle et le nombre de boucles théorique identifié en isolé. Il en découle une contention de l'application sensible mesurée, correspondant à l'élongation quelle subit vis-à-vis de l'application opérationnelle.

Lorsque les mesures de contentions déterminées lors de cette étape 140 correspondent à un mode de fonctionnement pire cas de l'application opérationnelle, ces mesures sont alors utilisables pour dimensionner l'agressivité de l'application opérationnelle et/ou et pour prédire par exemple son temps d'exécution maximal lors du fonctionnement nominal de la plateforme 10.

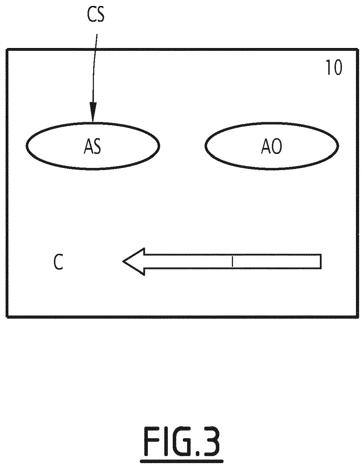

La mise en œuvre du procédé de mitigation selon ce premier mode de réalisation est schématiquement illustrée sur la figure 3.

En particulier, cette figure 3 illustre une mise en œuvre en parallèle de l'application opérationnelle AO et de l'application sensible AS construite à partir des critères de sensibilité CS. L'application sensible AS subit alors des interférence I de la part de l'application opérationnelle AO sur les canaux d'interférence correspondants qui se traduisent par des contentions C qui sont mesurées à la fin du procédé.

Dans le deuxième mode de réalisation du procédé de mitigation, lors de la première étape 110, le système 20 construit au moins une application gabarit, au lieu de l'application sensible telle qu'expliquée en relation avec le premier mode de réalisation.

Contrairement à une application sensible, une application gabarit est construite par le système 20 pour imposer des contentions sur l'application opérationnelle correspondante. De plus, contrairement à l'application sensible, l'application gabarit est construite à partir d'une application existante de la plateforme 10, c'est-à-dire à partir d'une application déjà intégrée dans la plateforme 10.

Avantageusement, lors de cette étape 110, le système 20 construit une application gabarit pour chaque application existante de la plateforme 10.

Pour construire une application gabarit pour une application existante de la plateforme 10, le système 20 détermine d'abord des paramètres d'agressivité de cette application existante.

En particulier, par « paramètres d'agressivité » d'une application, on entend des paramètres caractérisant la capacité de cette application à charger les ressources partagées 14-1, ...,14-N en générant un temps d'attente pour au moins une autre application de la plateforme 10, c'est-à-dire en générant des contentions dans la plateforme 10.

Puis, en analysant les paramètres d'agressivité de l'application existante, le système 20 construit une application gabarit qui correspond à un pire cas d'exécution, en termes de contentions, de cette application existante. Autrement dit, l'application gabarit est construite pour générer systématiquement au moins le maximum de contentions que l'application existante est capable de générer dans un contexte d'exécution pire cas.

Selon l'invention, le système 20 permet de déterminer les paramètres d'agressivité d'une application existante en utilisant deux techniques.

Selon une première technique, le système 20 permet de déterminer les paramètres d'agressivité d'une application existante en identifiant des motifs de contention prédéterminés dans le code source de cette application.

Par « code source », on entend un code utilisable pour créer l'application dans un ou plusieurs langages de programmation et interprétable donc par un compilateur de ces langages. Ces langages de programmation peuvent être de niveau haut et/ou de niveau bas, comme par exemple le langage assembleur.

Chaque motif de contentions prédéterminé est choisi par exemple dans le groupe comprenant :
- instruction d'actualisation du contexte d'une instruction associé à une ressource partagée (instruction de type « with update ») ;
- changement de pages au sein d'une même banque mémoire (par exemple le décalage d'adresse entre accès dans une mémoire de type DDR) ;
- éviction de lignes de la mémoire cache L2 ;
- instruction générant une contention.

Ainsi, le système 20 détermine les paramètres d'agressivité d'une application en fonction de critères d'agressivité des motifs de contention identifiés. Autrement dit, le système 20 détermine les paramètres d'agressivité en analysant les motifs de contention identifiés pour l'application donnée, compte tenu des critères d'agressivité prédéterminés. Chaque critère d'agressivité est par exemple choisi dans le groupe comprenant :
- nombre maximal d'instructions d'actualisation d'une ressource partagée ;
- nombre maximal de changements de pages au sein d'une même banque mémoire ;
- nombre maximal d'évictions de lignes de la mémoire cache L2 ;
- densité d'instructions générant une contention.

Selon une deuxième technique, le système 20 détermine les paramètres d'agressivité d'une application en exécutant cette application en parallèle avec au moins une application sensible, et en mesurant l'allongement du temps d'exécution de cette application sensible.

Autrement dit, dans ce cas, le système 20 détermine et mesure des contentions subies par l'application sensible de la part de l'application existante en utilisant les techniques similaires à celles décrites en relation avec le premier mode de réalisation du procédé de mitigation, dans lesquelles l'application opérationnelle est remplacée par l'application existante. Les mesures des contentions subies par l'application sensible forment dans ce cas les paramètres d'agressivité de l'application existante. Selon cette technique, l'application sensible est construite donc pour l'application existante donnée, en utilisant des critères de sensibilité similaires à ceux décrits précédemment.

La deuxième étape 120 du procédé de mitigation selon le deuxième mode de réalisation est analogue à l'étape correspondante du procédé selon le premier mode de réalisation. En particulier, lors de cette étape, le système 20 exécute l'application opérationnelle en parallèle avec chaque application gabarit générée lors de l'étape précédente.

Les applications gabarit remplacent donc toutes les autres applications de la plateforme 10 et présentent ainsi un pire cas pour chaque application existante correspondante.

La troisième et la quatrième étapes 130, 140 du procédé selon le deuxième mode de réalisation sont également analogues à celles expliquées précédemment en relation avec le premier mode de réalisation.

En particulier, lors de la troisième étape 130, le système 20 détermine les contentions générées sur l'application opérationnelle par l'ensemble des applications gabarit. Pour cela, comme dans le cas précédent, le système 20 analyse les canaux d'interférence de l'application opérationnelle avec chaque application gabarit.

Lors de la quatrième étape 140, le système 20 mesure les contentions générées en utilisant des techniques expliquées précédemment. Comme dans le cas précédent, la quatrième étape 140 peut être mise en œuvre en parallèle avec la troisième étape 130.

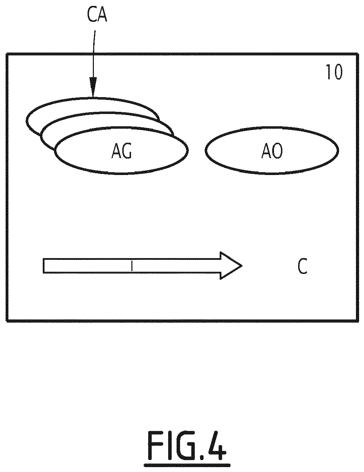

La figure 4 illustre la mise en œuvre du procédé de mitigation selon le deuxième mode de réalisation. En particulier, sur cette figure 4, l'application opérationnelle AO est exécutée sur la plateforme 10 en parallèle avec chacune des applications gabarit AG. Chaque application gabarit AG est construite à partir d'une application existante en utilisant des critères d'agressivité prédéterminés CA. Les applications gabarit génèrent alors des interférences I sur l'application opérationnelle AO qui se traduisent par des contentions C.

On conçoit alors que la présente invention présente un certain nombre d'avantages.

En particulier, l'invention permet de déterminer et de mesurer des contentions en utilisant une application sensible ou une application gabarit. Dans le premier cas, l'application sensible permet de mesurer l'agressivité de l'application opérationnelle correspondante et de quantifier donc les contentions pouvant être générées par cette application opérationnelle. Dans le deuxième cas, l'application gabarit permet de représenter un pire cas de l'application existante correspondante et de quantifier donc les contentions subies par l'application opérationnelle correspondante. Cela permet alors d'assurer une intégration indépendante de l'application opérationnelle sans devoir surdimensionner les contentions que celle-ci peut générer.

L'invention permet donc d'anticiper, réduire et maitriser les dérives que pourraient subir les applications et contribue aussi à la garantie d'un pire temps d'exécution (WCET) optimal.

Finalement, l'invention permet de résoudre le problème de dépendance entre les applications lors de l'intégration tout en limitant l'impact des contentions dans un contexte pire cas par l'usage des gabarits

## Revendications

1. Procédé de mitigation de contentions pour une application opérationnelle mise en œuvre par une plateforme embarquée (10), la plateforme embarquée (10) comprenant une pluralité de cœurs (12-1, ...,12-N) et une pluralité de ressources partagées (14-1, ...,14-M), chaque cœur (12-1, ...,12-N) étant apte à exécuter au moins une application en utilisant une ou plusieurs ressources partagées (14-1, ...,14-M) via un canal d'accès établi entre ce cœur (12-1, ...,12-N) et la ressource partagée (14-1, ...,14-M) correspondante permettant l'usage de cette ressource partagée (14-1, ...,14-M) ;
le procédé comprenant les étapes suivantes :
- construction (110) d'au moins une première application sensible configurée pour subir des contentions de la part de l'application opérationnelle ou d'au moins une application gabarit configurée pour imposer des contentions sur l'application opérationnelle et construite à partir d'une application existante de la plateforme (10) ;
- exécution (120) de l'application opérationnelle par la plateforme embarquée en parallèle avec la première application sensible ou l'application gabarit ;
- détermination (130) de contentions générées sur la première application sensible par l'application opérationnelle ou, respectivement, sur l'application opérationnelle par l'application gabarit ;
- mesure (140) des contentions déterminées ;
dans lequel l'application gabarit est déterminée à partir de paramètres d'agressivité de l'application existante correspondante, les paramètres d'agressivité d'une application caractérisant la capacité de cette application à charger les ressources partagées (14-1, ...,14-M) en générant un temps d'attente pour au moins une autre application de la plateforme (10).

2. Procédé selon la revendication 1, dans lequel les paramètres d'agressivité d'au moins une application sont déterminés en identifiant des motifs de contention prédéterminés dans le code source de cette application, chaque motif de contention prédéterminé étant choisi dans le groupe comprenant :
- instruction d'actualisation d'une ressource partagée ;
- changement de pages au sein d'une même banque mémoire ;
- éviction de lignes de la mémoire cache L2 ;
- instruction générant une contention.

3. Procédé selon la revendication 2, dans lequel les paramètres d'agressivité d'au moins une application sont déterminés en fonction de critères d'agressivité des motifs de contention identifiés, chaque critère d'agressivité étant choisi dans le groupe comprenant :
- nombre maximal d'instructions d'actualisation d'une ressource partagée ;
- nombre maximal de changements de pages au sein d'une même banque mémoire ;
- nombre maximal d'évictions de lignes de la mémoire cache L2 ;
- densité d'instructions générant une contention.

4. Procédé selon l'une quelconque des revendications précédentes, dans lequel les paramètres d'agressivité d'au moins une application sont déterminés en exécutant ladite application en parallèle avec au moins une deuxième application sensible configurée pour subir des contentions de la part de ladite application.

5. Procédé selon l'une quelconque des revendications précédentes, dans lequel la première application sensible ou la deuxième application sensible ne génère sensiblement pas de contentions sur l'application correspondante.

6. Procédé selon la revendication 5, dans lequel la première application sensible ou la deuxième application sensible partage au moins un canal d'interférence avec l'application correspondante, le ou chaque canal d'interférence étant un canal d'accès à une ressource partagée (14-1, ...,14-M) présentant au moins une partie partagée avec un autre canal d'accès à cette même ressource (14-1, ...,14-M).

7. Procédé selon l'une quelconque des revendications précédentes, dans lequel, lors de l'étape de construction (110), une application gabarit est construite pour chaque application existante de la plateforme (10), l'étape d'exécution (120) comprenant alors l'exécution de l'ensemble des applications gabarit construites en parallèle avec l'application opérationnelle et l'étape de détermination (130) comprenant la détermination de contentions générées sur l'application opérationnelle par chacune des applications gabarit ou toute combinaison des applications gabarit.

8. Procédé selon l'une quelconque des revendications précédentes, dans lequel, lors de l'étape de construction (110), une seule première application sensible est construite.

9. Système de mitigation de contentions (20) pour une application opérationnelle mise en œuvre par une plateforme embarquée (10), comprenant des moyens techniques adaptés pour mettre en œuvre le procédé selon l'une quelconque des revendications précédentes.
